# EUROPÄISCHE PATENTSCHRIFT

(11) **EP 3 282 058 B1**
(45) Veröffentlichungstag und Bekanntmachung des Hinweises auf die Patenterteilung: **04.03.2020**
(21) Anmeldenummer: 17184264.4
(22) Anmeldetag: 01.08.2017
(51) Int. Cl.: F16B 21/02, E03D 1/012, E03D 5/02, F16B 5/06, F16B 21/18, F16B 43/00

(54) **VORRICHTUNG ZUR BEFESTIGUNG EINES SANITÄREN BAUTEILS, INSBESONDERE EINES BEFESTIGUNGSRAHMENS FÜR EINE WC- ODER URINAL-BETÄTIGUNGSPLATTE**
DEVICE FOR FIXING A SANITARY COMPONENT, IN PARTICULAR A FIXING FRAME FOR A TOILET OR URINAL ACTUATING PLATE
DISPOSITIF DE FIXATION D'UN COMPOSANT SANITAIRE, EN PARTICULIER D'UN CADRE DE FIXATION POUR UNE PLAQUE D'ACTIONNEMENT DE WC OU D'URINOIR

(30) Priorität: 08.08.2016 DE 202016104356 U
(43) Veröffentlichungstag der Anmeldung: 14.02.2018
(73) Patentinhaber: Viega Technology GmbH & Co. KG, 57439 Attendorn (DE)
(72) Erfinder: Werthmann, Katrin, 57368 Lennestadt (DE); Görke, Daniel, 57369 Lennestadt (DE)
(74) Vertreter: Cohausz & Florack

(56) Entgegenhaltungen:
- EP-A1- 3 032 119
- EP-A2- 0 563 870
- WO-A1-2011/031243
- DE-U1- 29 822 703

## Beschreibung

Die Erfindung betrifft eine Vorrichtung zur Befestigung eines eine Befestigungsöffnung aufweisenden sanitären Bauteils, insbesondere eines Befestigungsrahmens für eine WC- oder Urinal-Betätigungsplatte zur Betätigung eines Ablaufventils eines Unterputzspülkastens, mit mindestens einem Befestigungsbolzen, der eine Zahnung aufweist, die durch im Wesentlichen axial verlaufende rinnenförmige Ausnehmungen in Zahnungsabschnitte gegliedert ist, an einem Ende einen radial vorstehenden Griff aufweist, bis zum Anschlag des Griffs in die Befestigungsöffnung einsteckbar und durch Drehen des Griffs mit einem von dem Bauteil beabstandeten, komplementäre Zahnungsabschnitte aufweisenden Gegenstück verbindbar ist, und einem Spannelement zum Fixieren des Befestigungsbolzens in seinem mit dem Gegenstück verbundenen Zustand.

Unterputzspülkästen für Badezimmer und Toiletten weisen typischerweise eine Revisionsöffnung auf, über die innere Komponenten des Spülkastens, z.B. das Ablaufventil montiert und gewartet werden können. Die Revisionsöffnung ist durch eine Betätigungsplatte abgedeckt, mittels der das Ablaufventil über einen Hebemechanismus betätigt werden kann. Zur lösbaren Befestigung der Betätigungsplatte wird üblicherweise ein hinter der Betätigungsplatte anzuordnender Befestigungsrahmen verwendet, der, auch Einbaurahmen genannt, am Außenrand der mit der Revisionsöffnung fluchtenden Vorwandöffnung befestigt wird. Zur spielfreien Befestigung dieses Rahmens werden herkömmlicherweise eine oder mehrere Schrauben in Befestigungsöffnungen des Rahmens gesteckt und mittels eines Werkzeugs in ein am Unterputzspülkasten angeordnetes Gegenstück eingeschraubt.

Des Weiteren ist aus der Praxis eine Vorrichtung der eingangs genannten Art bekannt, die einen linear verschiebbaren Spannkeil zum Fixieren des Befestigungsbolzens in seinem mit dem Gegenstück verbundenen Zustand aufweist. Diese bekannte Befestigungsvorrichtung ermöglicht zwar eine werkzeuglose, spielfreie Befestigung des Befestigungsrahmens, jedoch benötigt der Spannkeil deutlich mehr Bauraum als die herkömmliche Fixierung des Befestigungsrahmens mittels Schrauben. Der relativ hohe Bauraumbedarf bringt Probleme bei der Konstruktion angrenzender Bauteile mit sich.

Aus der DE 298 22 703 U1 ist eine Vorrichtung zur Befestigung eines Betätigungsorgans an einem Unterputzspülkasten mit einem Distanzbolzen, der eine Zahnung und einen an einem Ende radial vorstehenden Griff aufweist, bekannt. Der Distanzbolzen ist bis zum Anschlag des Griffs in eine Befestigungsöffnung einsteckbar und durch Drehen mit einem komplementäre Zahnungsabschnitte aufweisenden Gegenstück verbindbar.

Die EP 3 032 119 A1 offenbart eine selbstsichernde Schraubbolzenanordnung mit einer Unterlegscheibe, die eine Vielzahl von Sicherungs- oder Sperrvorsprüngen aufweist, welche jeweils aus einer geneigten Anschlagsfläche und einer vertikalen Anschlagsfläche gebildet sind. Der Kopf des Schraubbolzens hat an seiner der Unterlegscheibe zugewandten Unterseite eine der Unterlegscheibe entsprechende Oberflächenstruktur mit einer Vielzahl von Sicherungs- oder Sperrvorsprüngen, die jeweils aus einer geneigten Sperrfläche und einer vertikalen Sperrfläche gebildet sind.

Aus der WO 2011/031243 A1 ist es bekannt, den Kopf eines Befestigungsbolzens zur Befestigung eines rahmenförmigen Trägers für eine Betätigungsplatte an einem Unterputzspülkasten so ausbilden, dass der Kopf an seiner Vorderseite zwei sich kreuzende Stege aufweist.

Die EP 0 563 870 A2 offenbart eine Schnellbefestigungsvorrichtung, insbesondere für einen Befestigungsrahmen einer Betätigungsplatte eines Unterputzspülkastens. Die Vorrichtung umfasst ein Verschlusselement, das in Form eines Distanzbolzens mit einem einstückig angeformten Verschlusselementkopf ausgeführt ist, sowie eine Arretiervorrichtung, die zusätzlich zu dem Distanzbolzen ein Halteelement mit einer Öffnung zur Aufnahme des Distanzbolzens aufweist.

Der Erfindung liegt die Aufgabe zugrunde, eine Vorrichtung der eingangs genannten Art zu schaffen, die unter Beibehaltung der werkzeuglosen Montierbarkeit deutlich weniger Bauraum als die den Spannkeil aufweisende Befestigungsvorrichtung benötigt.

Diese Aufgabe wird durch eine Vorrichtung mit den in Anspruch 1 angegebenen Merkmalen gelöst. Bevorzugte und vorteilhafte Ausgestaltungen der erfindungsgemäßen Vorrichtung sind in den Unteransprüchen angegeben.

Die erfindungsgemäße Vorrichtung ist dadurch gekennzeichnet, dass das Spannelement als Spannring ausgebildet ist, in welchen der Befestigungsbolzen linear einschiebbar ist, wobei der Spannring um den eingeschobenen Befestigungsbolzen herum drehbar ist und mindestens einen dem Griff des Befestigungsbolzens zugeordneten Stirnflächenabschnitt aufweist, der in Umfangsrichtung des Spannrings ansteigt und als Abstützfläche für den Griff des Befestigungsbolzens dient.

Die erfindungsgemäße Vorrichtung ermöglicht eine werkzeuglose, spielfreie Befestigung eines sanitären Bauteils, insbesondere eines Befestigungsrahmens einer Betätigungsplatte eines Unterputzspülkastens, wobei der hierzu benötigte Bauraum gegenüber der bekannten Lösung, die einen linear einschiebbaren Spannkeil aufweist, deutlich reduziert ist. Dadurch lassen sich bauraumbedingte Probleme bei der Konstruktion eines angrenzenden Bauteils vermeiden bzw. ausräumen. Zudem bietet die erfindungsgemäße Vorrichtung den Vorteil, dass sich der mit dem Spannring fixierte Befestigungsbolzen zusammen mit dem Spannring durch eine einzige Handbewegung lösen lässt, wohingegen die den linear einschiebbaren Spannkeil aufweisende Vorrichtung zum Lösen des Befestigungsbolzens mindestens zwei verschiedene Handbewegungen erfordert.

Eine vorteilhafte Ausgestaltung der Erfindung ist dadurch gekennzeichnet, dass der Spannring an seiner dem Griff des Befestigungsbolzens zugewandten Stirnseite mindestens einen Absatz aufweist, der als Anschlag für den Griff dient, um beim Verbinden des Befestigungsbolzens mit dem Gegenstück durch Drehen des Befestigungsbolzens mittels des Griffs den Spannring mitzunehmen. Diese Ausgestaltung ermöglicht eine besonders einfache und komfortable Befestigung eines sanitären Bauteils, insbesondere eines Befestigungsrahmens einer Betätigungsplatte eines Unterputzspülkastens, indem der Befestigungsbolzen durch Drehen des Griffs mit einem von dem Bauteil beabstandeten, komplementäre Zahnungsabschnitte aufweisenden Gegenstück verbindbar ist und der Spannring zugleich in eine Stellung gedreht wird, aus welcher der zuvor verbundene Befestigungsbolzen dann durch Weiterdrehen des Spannrings auf einfache und zuverlässige Weise axial verspannt und somit fixiert werden kann.

Das Verbinden des Befestigungsbolzens mit dem komplementäre Zahnungsabschnitte aufweisenden Gegenstück kann auch als Verriegeln bezeichnet werden.

Nach einer weiteren Ausgestaltung der Erfindung ist vorgesehen, dass der Spannring mindestens zwei Stirnflächenabschnitte aufweist, die in einer Umfangsrichtung des Spannrings beide zueinander gleichsinnig ansteigen, als Abstützflächen für den Griff dienen und den Absatz und mindestens einen weiteren Absatz, der ebenfalls als Anschlag für den Griff dient, definieren. Hierdurch lässt sich bei kompakten Abmessungen des Spannrings die als Anschlag für den Griff dienende Kontaktfläche maximieren, wodurch sich eine Reduzierung des erforderlichen Kraftaufwands für das Mitdrehen des Spannrings erreichen lässt. Ferner ist diese Ausgestaltung bei kompakten Abmessungen des Spannrings für dessen Stabilität günstig.

Um den Befestigungsbolzen gut handhaben zu können, steht der Griff des Befestigungsbolzens vorzugsweise gegenüber dem Spannring radial vor. Der Griff ist dabei vorzugsweise im Wesentlichen T-förmig oder zweiflügelig ausgebildet.

Eine weitere bevorzugte Ausgestaltung der erfindungsmäßen Vorrichtung sieht vor, dass der Spannring mindestens einen radial nach außen vorstehenden Griff aufweist. Hierdurch wird ein Drehen des Spannrings um den in ihn eingeschobenen Befestigungsbolzen erleichtert. Vorzugsweise steht der Griff des Spannrings weiter radial vor als der Griff des Befestigungsbolzens, wodurch sich eine gute Zugänglichkeit und Handhabbarkeit des Griffs des Spannrings sicherstellen lässt.

Nach einer weiteren bevorzugten Ausgestaltung weist der Griff des Befestigungsbolzens in seiner Vorderseite mindestens eine Ausnehmung, vorzugsweise eine rinnenförmige Ausnehmung auf. Diese Ausgestaltung verleiht dem Griff bei hoher Stabilität und geringem Materialverbrauch eine besonders gute Handhabbarkeit.

Eine weitere vorteilhafte Ausgestaltung der Erfindung ist dadurch gekennzeichnet, dass der mindestens eine dem Griff des Befestigungsbolzens zugeordnete Stirnflächenabschnitt des Spannrings eine gezahnte Oberflächenstruktur aufweist. Durch eine solche Oberflächenstruktur lässt sich bei entsprechender Ausrichtung der Strukturelemente, beispielsweise durch eine sägezahnförmige Oberflächenstruktur, bei der die Zähne jeweils unterschiedlich schräg geneigte Flanken aufweisen und die beim Spannen des Befestigungsbolzens in Drehrichtung des Spannrings weisenden Flanken steiler ausgebildet sind als die gegen die Drehrichtung des Spannrings weisenden Flanken, der zum Spannen des Befestigungsbolzens erforderliche Kraftaufwand reduzieren und andererseits eine besonders zuverlässige Reibschluss- bzw. Formschlusssicherung des Spannrings an dem gespannten Befestigungsbolzen erzielen. Diesbezüglich ist es auch vorteilhaft, wenn der Griff des Befestigungsbolzens auf seiner dem Spannring zugewandten Rückseite eine gezahnte, vorzugsweise eine sägezahnförmige Oberflächenstruktur aufweist.

Nach einer weiteren vorteilhaften Ausgestaltung der erfindungsgemäßen Vorrichtung weist der Spannring an seiner Rückseite mindestens ein Rastelement zur drehbaren Verbindung von Spannring und sanitärem Bauteil auf, wobei zur Ausführung dieser drehbaren Verbindung das Rastelement in die Befestigungsöffnung des Bauteils eingerastet wird. Hierdurch lässt sich der Spannring in die Befestigungsöffnung einclipsen und somit auf einfache Weise werkzeuglos vormontieren.

Für ein einfaches Spannen des Befestigungsbolzens ist es ferner vorteilhaft, wenn gemäß einer weiteren Ausgestaltung der Erfindung das zu befestigende Bauteil, also beispielsweise der Befestigungsrahmen einer Betätigungsplatte eines Unterputzspülkastens, beabstandet von der Befestigungsöffnung mindestens einen Vorsprung aufweist, der als Anschlag für den Griff des Befestigungsbolzens und/oder als Anschlag für den Spannring, vorzugsweise den Griff des Spannrings, dient.

Nachfolgend wird die Erfindung anhand einer ein Ausführungsbeispiel darstellenden Zeichnung näher erläutert. Es zeigen:

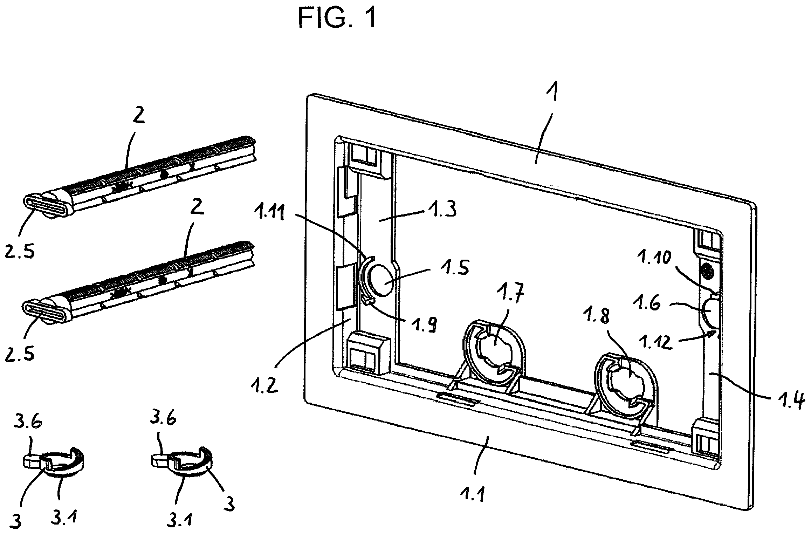

- Fig. 1: einen Befestigungsrahmen (Einbaurahmen), zwei Befestigungsbolzen und zwei Spannringe, in einer perspektivischen Darstellung;
- Fig. 2: den Befestigungsrahmen aus Fig. 1 mit den daran angebrachten Spannringen und den darin eingeschobenen Befestigungsbolzen, in einer perspektivischen Darstellung;
- Fig. 3: eine vergrößerte Darstellung des Details A der Fig. 2;
- Fig. 4: eine weitere vergrößerte perspektivische Darstellung eines Abschnitts des Befestigungsrahmens aus Fig. 2 mit einem daran angebrachten Spannring und einem darin eingeschobenen Befestigungsbolzen;
- Fig. 5: eine weitere Darstellung des Abschnitts des Befestigungsrahmens der Fig. 4, wobei der Befestigungsbolzen und der Spannring gegenüber dem Zustand in Fig. 4 um ca. 90° nach rechts gedreht sind; und
- Fig. 6: eine weitere Darstellung des Abschnitts des Befestigungsrahmens der Fig. 4, wobei der Spannring gegenüber dem Zustand in Fig. 5 um ca. 90° weiter nach rechts gedreht ist.

In der Zeichnung ist ein Befestigungsrahmen (Einbaurahmen) 1 dargestellt, welcher zur Befestigung einer WC- oder Urinal-Betätigungsplatte (nicht gezeigt) an einer Revisionsöffnung eines Unterputzspülkastens bestimmt ist. Der Befestigungsrahmen 1 weist einen umlaufenden Steg 1.1 auf, an den sich ein nach hinten vorspringender Kragen 1.2 einstückig anschließt. Im montierten Zustand liegt der umlaufende Steg 1.1 am Rand einer mit der Revisionsöffnung des Spülkastens fluchtenden Öffnung der den Spülkasten bedeckenden Vorwand an. An den nach hinten vorspringenden bzw. in die Vorwandöffnung hineinragenden Kragen 1.2 sind stegförmige Absätze 1.3, 1.4 mit Befestigungsöffnungen 1.5, 1.6 angesetzt oder vorzugsweise einstückig angeformt.

Die am unteren horizontalen Abschnitt des Befestigungsrahmens 1 angeordneten Befestigungsöffnungen 1.7, 1.8 dienen der Montage von Betätigungsbolzen (nicht gezeigt), über die eine Bewegung von an der Betätigungsplatte beweglich gelagerten Bedienelementen, z.B. Drucktasten, auf ein im Unterputzspülkasten angeordnetes Ablaufventil übertragen werden kann.

Zur Befestigung des Befestigungsrahmens 1 am Unterputzspülkasten dienen die in den stegförmigen Absätzen 1.3, 1.4 ausgebildeten Befestigungsöffnungen 1.5, 1.6, in die Befestigungsbolzen 2 eingesteckt werden. Jeder der beiden Befestigungsbolzen 2 weist eine Zahnung auf, die durch im Wesentlichen axial verlaufende rinnenförmige Ausnehmungen 2.1, 2.2 in Zahnungsabschnitte 2.3, 2.4 gegliedert ist. Die beiden rinnenförmigen Ausnehmungen 2.1, .2.2 sind diametral zueinander angeordnet.

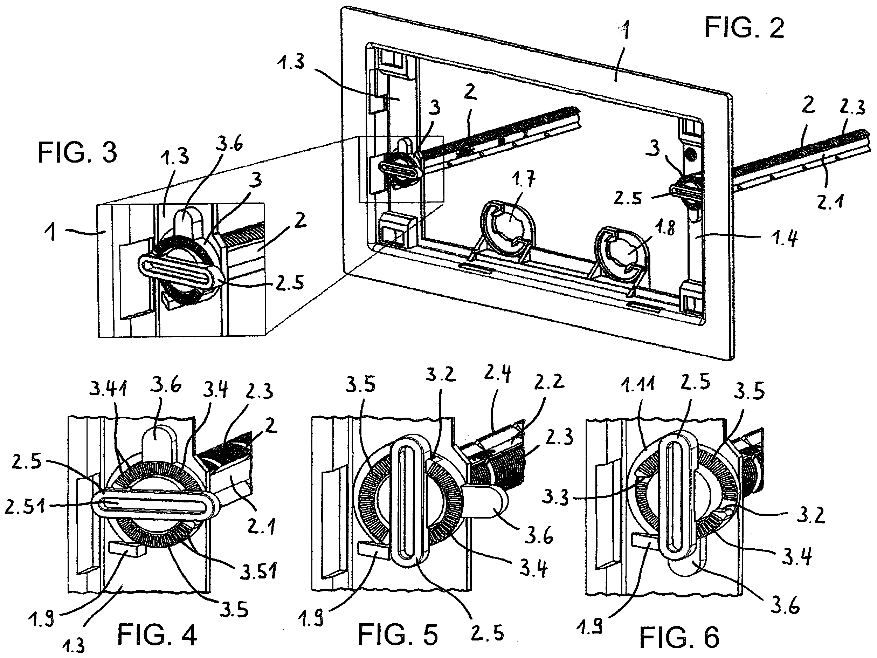

Dementsprechend liegen auch die beiden Zahnungsabschnitte 2.3, 2.4 des jeweiligen Befestigungsbolzens 2 diametral zueinander (vgl. Fig. 4 und 5).

Ferner weist jeder der beiden Befestigungsbolzen 2 an einem seiner Enden einen radial vorstehenden Griff 2.5 auf. Der Griff 2.5 ist vorzugsweise im Wesentlichen T-förmig oder zweiflügelig ausgebildet. In der Vorderseite des Griffs 2.5 ist vorzugsweise eine rinnenförmige Ausnehmung 2.51 ausgebildet.

Bevor der Befestigungsbolzen 2 in eine der Befestigungsöffnungen 1.5, 1.6 des Befestigungsrahmens 1 eingesteckt wird, wird er in einen Spannring 3 eingeschoben. Der Spannring 3 bleibt um den eingeschobenen Befestigungsbolzen 2 herum drehbar. Bevor der Befestigungsbolzen 2 in den Spannring 3 eingeschoben wird, wird der Spannring 3 vorzugsweise zunächst an der Befestigungsöffnung 1.5, 1.6 drehbar angebracht. Hierzu ist der Spannring 3 an seiner Rückseite beispielsweise mit einem Kragen 3.1 versehen, der eine oder mehrere radial nach außen vorstehende Rastnasen aufweist. Der Spannring 3 lässt sich somit in die Befestigungsöffnung 1.5, 1.6 einclipsen, so dass er drehbar mit dem Befestigungsrahmen 1 verbunden ist.

Der Spannring 3 weist zwei durch Absätze 3.2, 3.3 begrenzte Stirnflächenabschnitte 3.4, 3.5 auf, die in einer Umfangsrichtung des Spannrings 3 gleichsinnig ansteigen. Die Stirnflächenabschnitte 3.4, 3.5 können dabei in Umfangsrichtung des Spannrings jeweils linear oder exponentiell ansteigen. Sie dienen als Abstützflächen (Spannflächen) für den zweiflügeligen Griff 2.5 des Befestigungsbolzens, während die beiden Absätze 3.2, 3.3, die vorzugsweise diametral zueinander angeordnet sind, einen Anschlag für den Griff 2.5 definieren. Die Dicke des Spannrings 3 nimmt von einem der beiden Absätze 3.2, 3.3 bis zu dem nächsten Absatz 3.3 oder 3.2 entlang des Umfangs des Spannrings 3 zu.

Beide Enden des zweiflügeligen Griffs 2.5 des Befestigungsbolzens stehen gegenüber dem Spannring 3 radial vor. Des Weiteren weist auch der Spannring 3 einen radial nach außen vorstehenden Griff 3.6 auf. Der Griff 3.6 des Spannrings steht dabei radial weiter vor als der Griff 2.5 des Befestigungsbolzens 2.

Die beiden schräg ansteigenden Stirnflächenabschnitte 3.4, 3.5 des Spannrings 3 haben eine gezahnte Oberflächenstruktur. In dem dargestellten Ausführungsbeispiel umfasst die Oberflächenstruktur eine Vielzahl von im Wesentlichen radial verlaufenden Rippen oder Zähnen 3.41, 3.51. Die Flanken der Rippen oder Zähne 3.41, 3.51 haben vorzugsweise eine unterschiedliche Steigung. Die dem Anschlag bzw. die dem die geringste Dicke aufweisenden Abschnitt des Spannrings 3 zugewandten Zahnflanken (Rippenflanken) haben vorzugsweise eine deutlich geringere Flankensteilheit als die Flanken, welche in die entgegengesetzte Umfangsrichtung des Spannrings 3, also in Richtung der zunehmenden Dicke des Spannrings 3 weisen. Vorzugsweise weist auch der Griff 2.5 des Befestigungsbolzens 2 auf seiner dem Spannring 3 zugewandten Rückseite eine gezahnte Oberflächenstruktur auf. Diese Oberflächenstruktur des Griffs 2.5 besteht aus einem einzelnen, zwei oder wenigen Zähnen oder Rippen.

Der Befestigungsbolzen 2 wird soweit in die Befestigungsöffnung 1.5, 1.6 des Befestigungsrahmens eingesteckt, bis sein Griff 2.5 an dem dort angebrachten Spannring 3 anschlägt. Der Spannring 3 ist oder wird dabei vorzugsweise so ausgerichtet, dass seine Absätze 3.2, 3.3, die einen Anschlag für den Griff 2.5 des Befestigungsbolzens definieren, im Wesentlichen parallel zu einer Horizontalen oder Geraden liegen, die parallel zu der Längsmittelachse des Befestigungsrahmens 1 verläuft (vgl. Fig. 2 bis 4).

Danach werden die Zahnungsabschnitte 2.3, 2.4 des Befestigungsbolzens 2 durch Drehen des Griffs 2.5 um ca. 90° mit einem von dem Befestigungsrahmen 1 beabstandeten Gegenstück (nicht gezeigt), das komplementäre Zahnungsabschnitte aufweist, verbunden. Zugleich wird der Spannring 3 über den durch die Absätze 3.2, 3.3 definierten Anschlag mitgenommen (vgl. Fig. 5). Der zweiflügelige Griff 2.5 des Befestigungsbolzens liegt nun im Wesentlichen auf einer Vertikalen oder Geraden, die quer oder rechtwinklig zu der Längsmittelachse des Befestigungsrahmens 1 verläuft.

Der Befestigungsrahmen 1, und zwar sein stegförmiger Absatz 1.3, 1.4 hat beabstandet von der Befestigungsöffnung 1.5, 1.6 einen Vorsprung 1.9, 1.10, der als Anschlag für den Griff 2.5 des Befestigungsbolzens dient (vgl. Fig. 4 und 5).

Neben dem Vorsprung 1.9, 1.10 weist der stegförmige Absatz 1.3, 1.4 vorzugsweise einen bogenförmigen Steg 1.11, 1.12 auf, der radial beabstandet von der Befestigungsöffnung 1.5, 1.6 und beispielsweise im Wesentlichen konzentrisch zu der Befestigungsöffnung 1.5, 1.6 angeordnet ist. Der bogenförmige Steg 1.11, 1.12 gibt mögliche Einbaulagen des Spannrings 3 vor, da er eine freie Anordnung des Griffs 3.6 des Spannrings 3 teilweise verhindert.

Zum spielfreien Befestigen des Befestigungsrahmens 1 wird jeder der beiden Befestigungsbolzen 2, der zuvor mit dem komplementäre Zahnungsabschnitte aufweisenden Gegenstück (nicht gezeigt) verbunden wurde, mittels des Spannrings 3 linear verspannt. Hierzu wird der Spannring 3 relativ zu dem Griff 2.5 des Befestigungsbolzens 2 gedreht, indem der Griff 3.6 des Spannrings um ca. 90° in Richtung des durch den Vorsprung 1.9, 1.10 gesperrten Griffs 2.5 des Befestigungsbolzens 2 gedreht wird (vgl. Fig. 5 und 6).

Zur Montage des Bestigungsrahmens 1 wird also der Spannring 3 zunächst an der Befestigungsöffnung 1.5, 1.6 des Befestigungsrahmens angebracht, vorzugsweise eingeclipst. Sodann wird der Befestigungsbolzen 2 in den Spannring 3 und die Befestigungsöffnung 1.5, 1.6 linear eingeschoben (Fig. 2 bis 4). Danach wird der Befestigungsrahmen (Einbaurahmen) 1 durch Drehung des Griffs 2.5 des Befestigungsbolzens um etwa 90°, bei welcher der Spannring 3 über seinen dem Griff 2.5 des Befestigungsbolzens zugeordneten Anschlag (Absatz 3.2, 3.3) mitgenommen wird, verriegelt. Anschließend wird der Befestigungsbolzen 2 durch eine weitere Drehung des Spannrings 3 um maximal 90° in die vorherige Drehrichtung, unter Sperrung des Griffs 2.5 des Befestigungsbolzens 2 durch den Vorsprung 1.9, 1.10 des Befestigungsrahmens, verspannt. Das Maß dieser weiteren Drehung hängt vom vorhandenen Spiel ab und wird in der Realität größer 0° und kleiner/gleich 90° sein. Dieses spielfreie Befestigen des Befestigungsrahmens 1 erfordert kein Werkzeug.

Zum Lösen des so fixierten Befestigungsbolzens 2 werden dessen Griff 2.5 und der Griff 3.6 des Spannrings 3 zusammen um ca. 90° zurück gedreht. Auch hierzu ist kein Werkzeug erforderlich. Vielmehr kann das Lösen des fixierten Befestigungsbolzens 2 und dessen Entfernen aus der Befestigungsöffnung 1.5, 1.6 mit einem einzigen Handgriff ausgeführt werden.

Anhand des dargestellten Ausführungsbeispiels wird deutlich, dass die erfindungsgemäße Ausgestaltung des Befestigungsbolzens 2 und des zugeordneten Spannrings 3 eine werkzeuglose, spielfreie Befestigung des Befestigungsrahmens 1 bei vergleichsweise geringem Bauraumbedarf bietet.

Die Ausführung der Erfindung ist nicht auf das in der Zeichnung dargestellte Ausführungsbeispiel, insbesondere nicht auf die Befestigung eines Befestigungsrahmens einer Betätigungsplatte eines Unterputzspülkastens beschränkt. Vielmehr sind zahlreiche Varianten denkbar, die auch bei einer von dem gezeigten Ausführungsbeispiel abweichenden Gestaltung von der in den Ansprüchen angegebenen Erfindung Gebrauch machen. Die erfindungsgemäße Vorrichtung lässt sich grundsätzlich bei sämtlichen Befestigungen im Sanitärbereich anwenden, bei denen werkzeuglos und in kompakter Bauweise eine einzelne Verspannung der Bauteile erreicht werden soll.

## Patentansprüche

1. Vorrichtung zur Befestigung eines eine Befestigungsöffnung (1.5, 1.6) aufweisenden sanitären Bauteils, insbesondere eines Befestigungsrahmens (1) für eine WC- oder Urinal-Betätigungsplatte zur Betätigung eines Ablaufventils eines Unterputzspülkastens, mit mindestens einem Befestigungsbolzen (2), einem Gegenstück und einem Spannelement, wobei der mindestens eine Befestigungsbolzen (2) eine Zahnung aufweist, die durch im Wesentlichen axial verlaufende rinnenförmige Ausnehmungen (2.1, 2.2) in Zahnungsabschnitte (2.3, 2.4) gegliedert ist, wobei der mindestens eine Befestigungsbolzen (2) an einem Ende einen radial vorstehenden Griff (2.5) aufweist, bis zum Anschlag des Griffs (2.5) in die Befestigungsöffnung (1.5, 1.6) einsteckbar und durch Drehen mit dem im eingebauten Zustand von dem Bauteil beabstandeten, komplementäre Zahnungsabschnitte aufweisenden Gegenstück verbindbar ist, und wobei das Spannelement zum Fixieren des Befestigungsbolzens (2) in seinem mit dem Gegenstück verbundenen Zustand dient, **dadurch gekennzeichnet, dass** das Spannelement als Spannring (3) ausgebildet ist, in welchen der Befestigungsbolzen (2) linear einschiebbar ist, wobei der Spannring (3) um den eingeschobenen Befestigungsbolzen (2) herum drehbar ist und mindestens einen dem Griff (2.5) des Befestigungsbolzens zugeordneten Stirnflächenabschnitt (3.4, 3.5) aufweist, der in Umfangsrichtung des Spannrings (3) ansteigt und als Abstützfläche für den Griff (2.5) des Befestigungsbolzens (2) dient.

2. Vorrichtung nach Anspruch 1, **dadurch gekennzeichnet, dass** der Spannring (3) an seiner dem Griff (2.5) des Befestigungsbolzens (2) zugewandten Stirnseite mindestens einen Absatz (3.2, 3.3) aufweist, der als Anschlag für den Griff (2.5) dient, um beim Verbinden des Befestigungsbolzens (2) mit dem Gegenstück durch Drehen des Befestigungsbolzens (2) mittels des Griffs (2.5) den Spannring (3) mitzunehmen.

3. Vorrichtung nach Anspruch 2, **dadurch gekennzeichnet, dass** der Spannring (3) mindestens zwei Stirnflächenabschnitte (3.4, 3.5) aufweist, die in einer Umfangsrichtung des Spannrings (3) beide zueinander gleichsinnig ansteigen, als Abstützflächen für den Griff (2.5) dienen und den Absatz (3.2) und mindestens einen weiteren Absatz (3.3), der ebenfalls als Anschlag für den Griff (2.5) dient, definieren.

4. Vorrichtung nach einem der Ansprüche 1 bis 3, **dadurch gekennzeichnet, dass** der Griff (2.5) des Befestigungsbolzens (2) gegenüber dem Spannring (3) radial vorsteht.

5. Vorrichtung nach einem der Ansprüche 1 bis 4, **dadurch gekennzeichnet, dass** der Griff (2.5) des Befestigungsbolzens (2) in seiner Vorderseite mindestens eine Ausnehmung, vorzugsweise eine rinnenförmige Ausnehmung (2.51) aufweist.

6. Vorrichtung nach einem der Ansprüche 1 bis 5, **dadurch gekennzeichnet, dass** der Spannring (3) mindestens einen radial nach außen vorstehenden Griff (3.6) aufweist.

7. Vorrichtung nach einem der Ansprüche 1 bis 6, **dadurch gekennzeichnet, dass** der mindestens eine dem Griff (2.5) des Befestigungsbolzens (2) zugeordnete Stirnflächenabschnitt (3.4, 3.5) des Spannrings (3) eine gezahnte Oberflächenstruktur aufweist.

8. Vorrichtung nach einem der Ansprüche 1 bis 7, **dadurch gekennzeichnet, dass** der Griff (2.5) des Befestigungsbolzens (2) auf seiner dem Spannring (3) zugewandten Rückseite eine gezahnte Oberflächenstruktur aufweist.

9. Vorrichtung nach einem der Ansprüche 1 bis 8, **dadurch gekennzeichnet, dass** der Spannring (3) an seiner Rückseite mindestens ein Rastelement (3.1) zur drehbaren Verbindung von Spannring (3) und sanitärem Bauteil aufweist, wobei zur Ausführung dieser drehbaren Verbindung das Rastelement (3.1) in die Befestigungsöffnung (1.5, 1.6) des Bauteils eingerastet wird.

10. Vorrichtung nach einem der Ansprüche 1 bis 9, **dadurch gekennzeichnet, dass** das Bauteil beabstandet von der Befestigungsöffnung (1.5, 1.6) mindestens einen Vorsprung (1.9, 1.10) aufweist, der als Anschlag für den Griff (2.5) des Befestigungsbolzens (2) und/oder als Anschlag für den Spannring (3) dient.

## Claims

1. Device for fixing a sanitary component which has a fixing opening (1.5, 1.6), in particular a fixing frame (1) for a WC or urinal activation plate for activating a drainage valve of a concealed cistern, having at least one fixing pin (2), a counter-piece and a clamping element, wherein the at least one fixing pin (2) has a tooth arrangement which is divided by means of substantially axially extending channel-like recesses (2.1, 2.2) into tooth arrangement portions (2.3, 2.4), wherein the at least one fixing pin (2) has at one end a radially protruding handle (2.5), can be inserted as far as the stop of the handle (2.5) into the fixing opening (1.5, 1.6) and by means of rotation can be connected to the counter-piece which has complementary tooth arrangement portions and which is spaced apart from the component in the installed state, and wherein the clamping element serves to fix the fixing pin (2) in the state thereof connected to the counter-piece, **characterised in that** the clamping element is constructed as a clamping ring (3) in which the fixing pin (2) can be linearly inserted, wherein the clamping ring (3) can be rotated about the inserted fixing pin (2) and has at least one end face portion (3.4, 3.5) which is associated with the handle (2.5) of the fixing pin and which rises in the peripheral direction of the clamping ring (3) and which acts as a support face for the handle (2.5) of the fixing pin (2).

2. Device according to claim 1, **characterised in that** the clamping ring (3) has at the end side thereof facing the handle (2.5) of the securing pin (2) at least one shoulder (3.2, 3.3) which acts as a stop for the handle (2.5) in order when the fixing pin (2) is connected to the counter-piece to carry the clamping ring (3) by rotating the fixing pin (2) using the handle (2.5).

3. Device according to claim 2, **characterised in that** the clamping ring (3) has at least two end face portions (3.4, 3.5) which both rise towards each other in the same direction in a peripheral direction of the clamping ring (3), which act as support faces for the handle (2.5) and which define the shoulder (3.2) and at least one additional shoulder (3.3) which also acts as a stop for the handle (2.5).

4. Device according to any one of claims 1 to 3, **characterised in that** the handle (2.5) of the fixing pin (2) protrudes radially with respect to the clamping ring (3).

5. Device according to any one of claims 1 to 4, **characterised in that** the handle (2.5) of the fixing pin (2) has in the front side thereof at least one recess, preferably a groove-like recess (2.51).

6. Device according to any one of claims 1 to 5, **characterised in that** the clamping ring (3) has at least one radially outwardly protruding handle (3.6).

7. Device according to any one of claims 1 to 6, **characterised in that** the end face portion (3.4, 3.5) of the clamping ring (3) associated with the handle (2.5) of the fixing pin (2) has a toothed surface structure.

8. Device according to any one of claims 1 to 7, **characterised in that** the handle (2.5) of the fixing pin (2) has at the rear side thereof facing the clamping ring (3) a toothed surface structure.

9. Device according to any one of claims 1 to 8, **characterised in that** the clamping ring (3) has at the rear side thereof at least one locking element (3.1) for rotatable connection of the clamping ring (3) and the sanitary component, wherein, in order to carry out this rotatable connection, the locking element (3.1) is engaged in the fixing opening (1.5, 1.6) of the component.

10. Device according to any one of claims 1 to 9, **characterised in that** the component has with spacing from the fixing opening (1.5, 1.6) at least one projection (1.9, 1.10) which acts as a stop for the handle (2.5) of the fixing pin (2) and/or as a stop for the clamping ring (3).

## Revendications

1. Dispositif de fixation d'un élément sanitaire comportant un orifice de fixation (1.5, 1.6), en particulier un cadre de fixation (1) pour une plaque d'actionnement de toilettes ou d'un urinoir pour l'actionnement de vanne de vidange d'un réservoir de chasse d'eau encastré, comportant au moins un boulon de fixation (2), une contre-pièce et un élément de serrage, où l'au moins un boulon de fixation (2) présente une denture qui est divisée en sections de denture (2.3, 2.4) par des cavités (2.1, 2.2) en forme de rainure, s'étendant essentiellement axialement, où l'au moins un boulon de fixation (2) présente sur une extrémité, une poignée (2.5) s'étendant de manière radiale, peut être enfiché dans l'orifice de fixation (1.5, 1.6) jusqu'à la butée de la poignée (2.5) et relié par rotation dans l'état encastré de l'élément, à la contre-pièce présentant des sections de denture complémentaires, et où l'élément de serrage sert à la fixation du boulon de fixation (2) dans son état relié à la contre-pièce,
**caractérisé en ce que** l'élément de serrage a la forme d'un anneau de serrage (3), dans lequel le boulon de fixation (2) peut être inséré de manière linéaire, où l'anneau de serrage (3) peut être tourné autour du boulon de serrage (2) inséré et présente au moins une section de surface (3.4, 3.5) associée à la poignée (2.5) du boulon de fixation, laquelle surface s'élève dans la direction de la circonférence de l'anneau de serrage (3) et sert de surface de butée pour la poignée (2.5) du boulon de fixation (2).

2. Dispositif selon la revendication 1, **caractérisé en ce que** l'anneau de serrage (3) présente au moins un épaulement (3.2, 3.3) sur sa face avant orientée vers la poignée (2.5) du boulon de fixation (2), lequel épaulement sert de butée pour la poignée (2.5) pour entrainer l'anneau de serrage (3) par rotation du boulon de fixation (2) au moyen de la poignée (2.5) lors de la connexion du boulon de fixation (2) à la contre-pièce.

3. Dispositif selon la revendication 2, **caractérisé en ce que** l'anneau de serrage (3) présente au moins deux sections de surface frontale (3.4, 3.5) qui s'élèvent toutes deux dans le même sens dans la direction de la circonférence de l'anneau de serrage (3), servent de surface de butée pour la poignée (2.5) et définissent l'épaulement (3.2) et au moins un autre épaulement (3.3), qui sert également du butée pour la poignée (2.5).

4. Dispositif selon l'une quelconque des revendications 1 à 3, **caractérisé en ce que** la poignée (2.5) du boulon de fixation (2) avance de manière radiale contre l'anneau de serrage (3).

5. Dispositif selon l'une quelconque des revendications 1 à 4, **caractérisé en ce que** la poignée (2.5) du boulon de fixation (2) présente sur sa face avant, au moins une cavité, de préférence une cavité en forme de rainure (2.51).

6. Dispositif selon l'une quelconque des revendications 1 à 5, **caractérisé en ce que** l'anneau de serrage (3) présente au moins une poignée (3.6) s'élevant radialement vers l'extérieur.

7. Dispositif selon l'une quelconque des revendications 1 à 6, **caractérisé en ce que** l'au moins une section de surface frontale (3.4, 3.5) de l'anneau de serrage (3), associée à la poignée (2.5) du boulon de fixation (2) présente une structure de surface dentée.

8. Dispositif selon l'une quelconque des revendications 1 à 7, **caractérisé en ce que** la poignée (2.5) du boulon de fixation (2) présente une structure de surface dentée sur sa face arrière orientée vers l'anneau de serrage (3).

9. Dispositif selon l'une quelconque des revendications 1 à 8, **caractérisé en ce que** l'anneau de serrage (3) présente sur sa face arrière, un élément d'encliquetage (3.1) pour une connexion par rotation de l'anneau de serrage (3) et de l'élément sanitaire, où pour obtenir cette connexion par rotation, l'élément d'encliquetage (3.1) est enclenché dans l'orifice de fixation (1.5, 1.6) de l'élément.

10. Dispositif selon l'une quelconque des revendications 1 à 9, **caractérisé en ce que** l'élément présente au moins une saillie (1.9, 1.10) à distance de l'orifice de fixation (1.5, 1.6), laquelle saillie sert de butée pour la poignée (2.5) du boulon de fixation (2) et/ou de butée pour l'anneau de serrage (3).
